# EUROPEAN PATENT SPECIFICATION

(11) **EP 1 471 277 B1**
(45) Date of publication and mention of the grant of the patent: **29.07.2009**
(21) Application number: 04075982.1
(22) Date of filing: 31.03.2004
(51) Int. Cl.: F16D 23/12, F16D 27/00, F16D 29/00

(54) **Clutch actuator**
Kupplungs-Aktor
Actionneur d'embrayage

(30) Priority: 31.03.2003 JP 2003095150
(43) Date of publication of application: 27.10.2004
(73) Proprietor: AISIN SEIKI KABUSHIKI KAISHA, Kariya-shi, Aichi-ken (JP)
(72) Inventor: Naito, Takao, Nagoya-shi, Aichi-ken (JP); Soga, Yoshitaka, Kariya-shi, Aichi-ken (JP); Imai, Hiroshi, Toyota-shi, Aichi-ken (JP)
(74) Representative: Marshall, John Grahame

(56) References cited:
- DE-A1- 19 700 935
- GB-A- 2 313 885

## Description

### FIELD OF THE INVENTION

This invention generally relates to a clutch actuator and a transmission system with a clutch actuator.

### BACKGROUND

There is a system with a conventional manual transmission attached with an actuator. The system automatically performs a series of a shift operation, such as a clutch connection/disconnection operation and a gear shift/select operation, in response to a driver's intention or in accordance with a vehicle driving condition. In this type of system, the actuator for the clutch connection/disconnection operation includes a driving power source, e.g., an electrically driven type motor, and an output rod. The driving power source is activated to operate the output rod with a certain amount of the driving power for the purpose of changing a posture of a diaphragm and so on. Generally speaking, a relatively large force is required to operate the output rod. In this case, the size of the driving power source may be enlarged. In light of foregoing, it is preferable to reduce driving power to be outputted from the driving power source, thereby leading to downsizing of the driving power source.

According to Japanese Patent Laid-Open Publication No. 1998-119603, a worm wheel gear (including a wheel and a shaft) is included in the actuator to decrease a rotational speed of a shaft of the driving power source. Therefore, a stroke position of the output rod can be self-maintained even when the driving power source has not been electrically excited. Further, the actuator includes a biasing mechanism, i.e., an assist spring, which is adjusted to assist the operation of the output rod. As described above, the driving power source or the actuator itself has been downsized by reducing driving power to be outputted from the driving power source of the actuator.

However, the actuator described above includes the worm wheel gear to decrease the rotational speed of the driving power source. Therefore, the output rod, a speed decelerating mechanism including the worm wheel gear, and the driving power source must be arranged substantially at the same level, i.e., substantially at an identical plane.
GB-A-2313885 shows such an actuator. In this case, the length of the actuator may be increased.

A need exists for providing an improved clutch actuator that is superior in versatility and assembling performance.

### SUMMARY OF THE INVENTION

The invention provides a clutch actuator as defined in claim 1 herein.
The output rod and the driving power source can be arranged side by side substantially in the same direction of the actuator, one on each side of the plane of the assist spring. In this case, the entire length of the actuator can be effectively shortened, thereby enhancing the mounting performance of the actuator at the transmission.

### BRIEF DESCRIPTION OF THE DRAWING FIGURES

The foregoing and additional features and characteristics of the present invention will become more apparent from the following detailed description considered with reference to the accompanying drawing figures, wherein:
Fig. 1 is a cross sectional view illustrating a clutch mechanism and a clutch actuator according to an embodiment of the present invention;
Fig. 2 is a front view illustrating details of the clutch mechanism illustrated in Fig. 1;
Fig. 3 is a front view illustrating details of an actuator illustrated in Fig. 1;
Fig. 4 is a cross sectional view of the actuator taken along a line 4-4 in Fig. 3; and
Fig. 5 is a cross sectional view of the actuator taken along a line 5-5 in Fig. 4.

### DETAILED DESCRIPTION

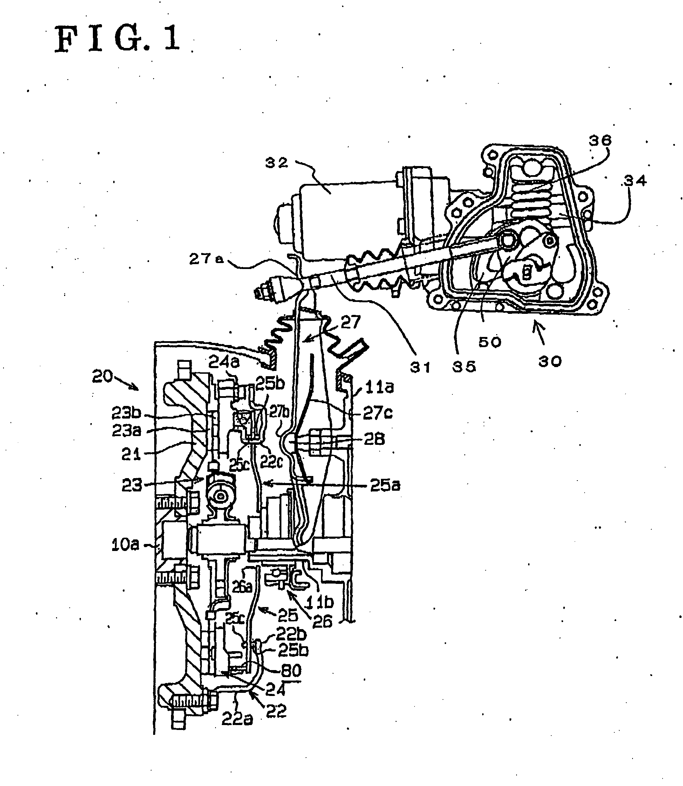

As illustrated in Fig. 1, a clutch system according to an embodiment of the present invention includes a friction clutch assembly 20 arranged between a driving power source such as an engine and a transmission, and an actuator 30 adjusted to operate the friction clutch assembly 20. An engagement condition of the friction clutch assembly 20 varies by activating the actuator 30 by a controller (not shown). The friction clutch assembly 20 is configured with main components such as a flywheel 21, a clutch cover 22, a clutch disc 23, a pressure plate 24, a diaphragm spring 25, a release bearing 26, a release fork 27, and a pivot supporting member 28 fixed to a transmission casing 11a. The pressure plate 24 and the diaphragm spring 25 are integrally assembled to the clutch cover 22. Therefore, the pressure plate 24, the diaphragm spring 25, and the clutch cover 22 can be referred to as a clutch cover assembly.

The flywheel 21 is a cast-iron disc as a non-limiting example. The flywheel 21 is fixed to a crankshaft 10a of the engine by means of bolts. Therefore, the flywheel 21 can be integrally rotated with the crankshaft 10a.

The clutch cover 22 is an approximately cylindrical structure with a cylindrical portion 22a, a flange portion 22b formed at an inner peripheral side of the cylindrical portion 22a, and plural fulcrum forming portions 22c formed at an inner peripheral edge of the cylindrical portion 22a. The plural fulcrum forming portions 22c are arranged with equal spacing between each of them in a circumferential direction of the clutch cover 22. The clutch cover 22 is fixed to the flywheel 21 via outer peripheral portions of the cylindrical portion 22a by means of bolts.
Therefore, the clutch cover 22 can be integrally rotated with the flywheel 21.

The clutch disc 23 is a friction plate for transmitting driving power from the engine to the transmission. The clutch disc 23 is arranged between the flywheel 21 and the pressure plate 24. A central portion of the clutch disc 23 is spline-engaged with an input shaft of the transmission, and so the clutch disc 23 can be moved in an axial direction thereof. Clutch facings 23a and 23b are fixed to both outer peripheral surfaces of the clutch disc 23 by means of rivets. The clutch facings 23a and 23b are made of friction material, respectively.

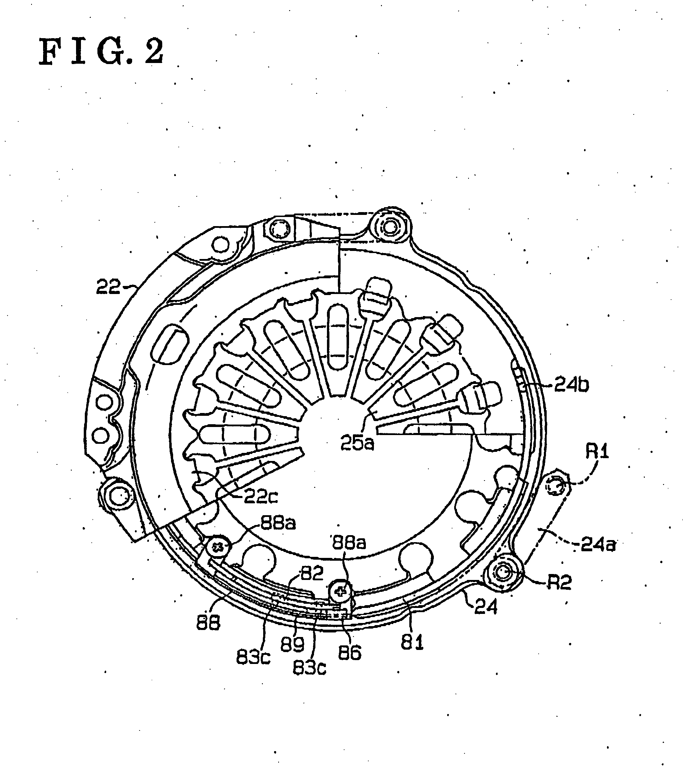

The pressure plate 24 pushes the clutch disc 23 towards the flywheel 21 so as to frictionally engage the clutch disc 23 between the flywheel 21 and the pressure plate 24. Therefore, the pressure plate 24, the clutch disc 23 and the flywheel 21 can be integrally rotated. The pressure plate 24 is connected to the clutch cover 22 via straps 24a so as to rotate along with rotation of the clutch cover 22. Each strap 24a is formed with plural thin accumulated leaf springs. As illustrated in Fig. 2, one end of the strap 24a is secured to an outer peripheral portion of the clutch cover 22 by means of a rivet R1, and the other end thereof is secured to a projection formed at an outer peripheral portion of the pressure plate 24 by means of a rivet R2. Therefore, each strap 24a applies a biasing force to the pressure plate 24 in an axial direction thereof, wherein the pressure plate 24 can be moved away from the flywheel 21.

As illustrated in Fig. 2, the diaphragm spring 25 includes plural elastic plate members (hereinafter, referred to as lever members 25a) radially arranged along an inner periphery of the cylindrical portion 22a of the clutch cover 22. According to the embodiment of the present invention, the diaphragm spring 25 includes twelve lever members 25a. Going back to Fig. 1, each lever member 25a is supported at each fulcrum forming portion 22c of the clutch cover 22 via a pair of annular fulcrum members 25b and 25c, each of which is provided at each axial side of the lever member 25a. Therefore, each lever member 25a can be pivotably moved relative to the clutch cover 22 via the fulcrum members 25b and 25c.

The release bearing 26 is held to be slidably movable relative to a holding sleeve 11b supported by the transmission casing 11a. The holding sleeve 11b covers an outer periphery of the input shaft of the transmission. The release bearing 26 is provided with a force point portion 26a for pushing an inner edge portion of each lever member 25a, i.e., a central side of the diaphragm spring 25, towards the flywheel 21.

The release fork 27 is operated for slidably moving the release bearing 26 in the axial direction in response to activation of the actuator 30. One end of the release fork 27 is in contact with the release bearing 26, and the other end thereof is in contact with a tip end of an output rod 31 of the actuator 30 via a contact portion 27a. The release fork 27 is assembled at the pivot supporting member 28 via a spring 27c fixed to the transmission casing 11a. The release fork 27 can be pivotably moved with the pivot supporting member 28 as a fulcrum at an approximately central portion 27b thereof.

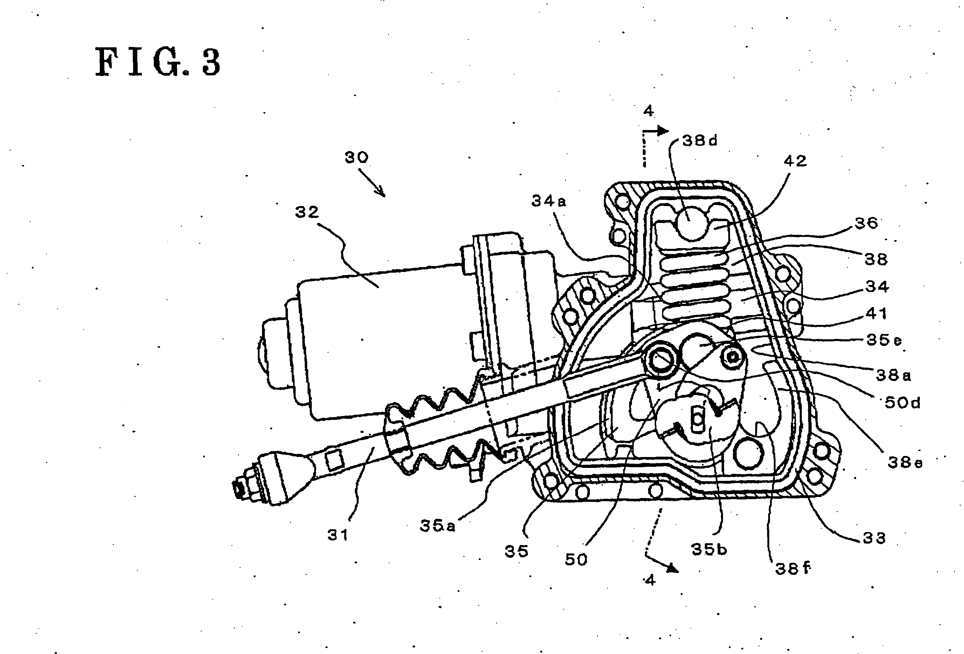

Next, following explanation will be given for explaining details about the actuator 30 with reference to Figs. 3 through 5. The actuator 30 is activated for applying a force to the diaphragm spring 25, which varies the engagement condition of the clutch disc 23, by moving the output rod 31 back and forth.

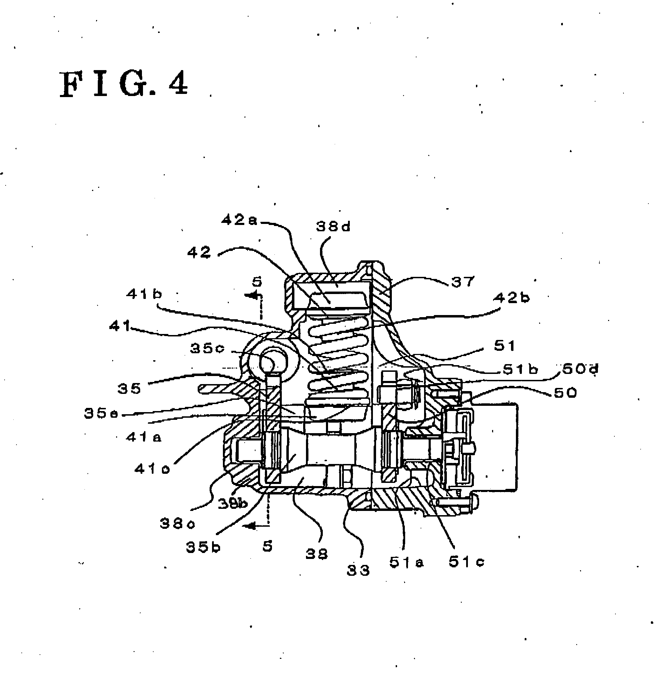

With reference to Figs. 3 and 4, the actuator 30 includes an electric motor 32, i.e., a driving power source. The electric motor 32 is preferably applied with direct current. The actuator 30 further includes a housing 33 with a supporting portion 38d, a rotational shaft 34 rotationally driven by the electric motor 32, a worm-driven wheel gear 35 (i.e., a rotational member) meshed with the rotational shaft 34, a sub wheel gear 50 (i.e., a driven rotational member), an assist spring 36 (i.e., means for biasing), and a housing cover 37. According to the embodiment of the present invention, the assist spring 36 can be a coil spring as a non-limiting example.

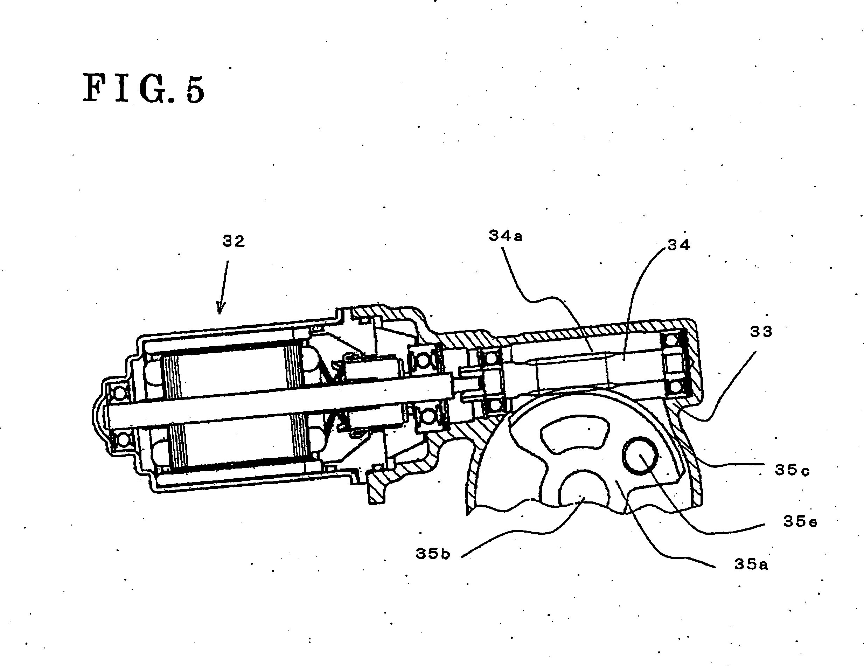

When the electric motor 32 is applied with the electric current by the controller (not shown), the electric motor 32 drives the rotational shaft 34 for rotation in either forward or reverse rotational direction. The housing 33 is secured to appropriate portions of a vehicle and supports the electric motor 32. The housing 33 includes an accommodating portion 38 with a bottom. The rotational shaft 34 extends in a left direction in Fig. 3 from one side of a sidewall 38a of the accommodating portion 38. A base end of the rotational shaft 34 is rotatably supported by the housing 33 at a right side in Fig. 5, and a tip end thereof is rotatably supported by the housing 33 at a left side in Fig. 5. A worm portion 34a is provided at an approximately axially central portion of the rotational shaft 34.

As also illustrated in Fig. 4, the accommodating portion 38 further includes a bottom wall 38b having an approximately cylindrically shaped bearing portion 38c with a bottom. The worm-driven wheel gear 35 is rotatably supported by the bearing portion 38c. More specifically, the worm-driven wheel gear 35 includes an approximately fan-shaped wheel 35a and a shaft 35b as a connecting member, and as means for transmitting. The shaft 35b penetrates an approximately central portion of the wheel 35a. One side (at a left side in Fig. 4) of the shaft 35b is inserted into the bearing portion 38c via a bushing. Therefore, the worm-driven wheel gear 35 can be supported in the accommodating portion 38,i.e., can be rotatably supported by the bottom wall 38b. A gear portion 35c is provided at an outer peripheral edge of the wheel 35a. The gear portion 35c is meshed with the worm portion 34a of the rotational shaft 34. Therefore, when the rotational shaft 34 is driven for rotation, the worm-driven wheel gear 35 is rotated along with the rotation of the rotational shaft 34.

In the meantime, the housing cover 37 includes an accommodating portion 51 with a bottom. The output rod 31 extends in the left direction in Fig. 3 from one side of a sidewall 51a of the accommodating portion 51. The accommodating portion 51 further includes a bottom wall 51b having a bearing portion 51c. The other end (a right side in Fig. 4) of the shaft 35b is inserted into the bearing portion 51c via a bushing, and so the shaft 35b can be rotationally supported by the accommodating portion 51. The shaft 35b of the worm-driven wheel gear 35 penetrates an approximately central portion of the sub wheel gear 50. Therefore, it is preferable that the worm-driven wheel gear 35 and the sub wheel gear 50 are integrally provided.

As illustrated in Figs. 3 and 4, a rod supporting pin 50d is secured to an outer peripheral portion at an upper side of the sub wheel gear 50 offset from a rotational centre thereof. The rod supporting pin 50d extends towards one side, i.e., towards the right side in Fig. 4, approximately parallel with an axial direction of the sub wheel gear 50. According to the embodiment of the present invention, it is preferable that the rod supporting pin 50d has an approximately cylindrically shaped structure as a non-limiting example. The output rod 31 extends and projects in the left direction in Fig. 3 from the rod supporting pin 50d from the one side of the sidewall 51a of the accommodating portion 51. A base end portion of the output rod 31 can be engaged with the rod supporting pin 50d and rotatably supported thereby. As described above, the output rod 31 is housed in a space defined between the sub wheel gear 50 and the bottom wall 51b and is connected to the worm wheel gear 35 via the sub wheel gear 50. When the worm-driven wheel gear 35 rotates, the output rod 31 moves back and forth relative to the housing 33. For example, when the worm-driven wheel gear 35 rotates in a clockwise direction in Fig. 3, the output rod 31 moves backward, i.e., in the right direction in Fig. 3. In this case, a clutch stroke ST is increased in response to the backward movement of the output rod 31. On the other hand, when the worm-driven wheel gear 35 rotates in a counterclockwise direction in Fig. 3, the output rod 31 moves forward, i.e., in the left direction in Fig. 3. In this case, the clutch stroke ST is decreased in response to the forward movement of the output rod 31. The rotation range of the worm-driven wheel gear 35 is designed to uniquely determine the engagement condition of the clutch mechanism corresponding to the rotational direction of the worm-driven wheel gear 35.

As illustrated in Fig. 3, a supporting pin 35e (i.e., a supporting member, means for supporting) extends between the worm-driven wheel gear 35 and the sub wheel gear 50 in approximately parallel with the axial direction. According to the embodiment of the present invention, it is preferable that the supporting pin 35e has an approximately cylindrically shaped structure or a tapered structure, as a non-limiting example. One end of the supporting pin 35e is connected to an outer peripheral portion at an upper side of the rotational centre of the worm-driven wheel gear 35, and the other end thereof is supported by the sub wheel gear 50. In the meantime, the supporting portion 38d projects from one side (an upper side in Fig. 3) of the sidewall 38a of the accommodating portion 38 in the direction of the supporting pin 35e. According to the embodiment of the present invention, the supporting portion 38d is represented by a pin disposed in a recessed portion defined at the housing 33. Accordingly, the assist spring 36 is engaged with the supporting pin 35e and the supporting portion 38d, and is supported thereby.

More particularly, a supporting table 41, i.e., a first supporting portion, is provided straddling the supporting pin 35e. The supporting table 41 has a seating portion 41a being recessed corresponding to the supporting pin 35e. The supporting table 41 is movably engaged with the supporting pin 35e via the seating portion 41a. The supporting table 41 further has a positioning pin 41b as a positioning portion projecting from the seating portion 41a in an opposite direction to the supporting pin 35e. The positioning pin 41b has an outer diameter approximately equal to an inner diameter of the assist spring 36, and determines a position of one end of the assist spring 36.

In the meantime, a supporting table 42, i.e., a second supporting portion, is straddling beneath the supporting portion 38d. The supporting table 42 has a seating portion 42a being recessed corresponding to the supporting portion 38d. The supporting table 42 is movable engaged with the supporting portion 38d via the seating portion 42a. The supporting table 42 further has a positioning pin 42b as a positioning portion projecting from the seating portion 42a in an opposite direction to the supporting portion 38d. The positioning pin 42b has an outer diameter approximately equal to an inner diameter of the assist spring 36, and determines a position of the other end of the assist spring 36.

As described above, the assist spring 36 is supported between the supporting tables 41 and 42 with the positioning pins 41b and 42b being inserted into the assist spring 36. The assist spring 36 is hence housed in a space between the wheel 35a of the worn wheel gear 35 and the sub wheel gear 50. The one end of the assist spring 36 is engaged with the supporting pin 35e via the supporting table 41.

Therefore, when the worm-driven wheel gear 35 rotates, the assist spring 36 rotates along with the rotation of the worm-driven wheel gear 35. According to the aforementioned structure of the actuator 30 according to the embodiment of the present invention, the electric motor 32 and the output rod 31 can be allocated at the same side of the actuator 30 (the left side of the actuator 30 in Fig. 3). In this case, a longitudinal dimension of the actuator 30, i.e., a length of the actuator 30 from the left side to the right side in Fig. 3, can be effectively reduced, thereby improving versatility and ease of assembly of the actuator 30. More particularly, the actuator 30 can be effectively prevented from being interfered by adjacent components such as an engine, an engine mount, a release fork, and so on.

As illustrated in Fig. 3, a restraining wall 38e (i.e., means for restraining) forming a stopper is provided at the bottom wall 38b. The restraining wall 38e restrains the movement of the assist spring 36 rotated along with the rotation of the worm-driven wheel gear 35. When the restraining wall 38e rotates in a clockwise direction and comes to a predetermined position, an edge surface 41c of the supporting table 41 comes in contact with the retraining wall 38e. At this point, further rotation of the assist spring 36 can be effectively restrained. The restraining wall 38e has a guiding groove 38fwhich allows movement of the supporting pin 35e, positioned to provide a recess along a rotation locus of the supporting pin 35e. Therefore even if the movement of the assist spring 36 has been restrained by the restraining wall 38e, the supporting pin 35e can be moved within a predetermined movement range along the guiding groove 38f. In this case, the worm-driven wheel gear 35 can only be rotated under the condition that the supporting table 41 for the assist spring 36 has remained at the restraining wall 38e. According to the embodiment of the present invention, within a moving range of the assist spring 36, the assist spring 36 is positioned at a right upper side in Fig. 3 relative to a rotation centre of the worm-driven wheel gear 35 corresponding to the supporting pin 35e. In this case, the assist spring 36 has been compressed and supported between the supporting tables 41 and 42. Further, the assist spring 36 has been applying a biasing force to the worm wheel-driven gear 35. The biasing force biases the worm-driven wheel gear 35 to rotate in the clockwise direction in Fig. 3. Therefore, the output rod 31 is moved in the right direction in Fig. 3, thereby bringing the clutch mechanism to the disengagement side.

As described above, according to the embodiment of the present invention, desired driving force to be outputted from the electric motor 32 can be effectively reduced by providing the aforementioned type assist spring 36 in the actuator 30. This can effectively lead to downsizing of the electric motor 32 and further lead to downsizing and weight saving of the actuator 30.

According to the embodiment of the present invention, the worm-driven wheel gear 35 and the sub wheel gear 50 are not positioned at an identical plane. Therefore, the output rod 31 and the driving power source 32 can be arranged substantially in the same direction of the actuator. In this case, the entire length of the actuator can be effectively shortened, thereby enhancing the mounting performance of the actuator at the transmission.

According to the embodiment of the present invention, the one end of the assist spring 36 is supported by the supporting pin 35e, opposite ends of which are supported by the worm-driven wheel gear 35 and the sub wheel gear 50. The other end of the assist spring 36 is supported by the housing 33, i.e., the supporting portion 38d. Therefore, the actuator 30 can be provided with the assist spring 36, of which spring constant number, i.e., Young's modulus is relatively large. The driving power source 32 hence can be effectively downsized.

According to the embodiment of the present invention, the one end of the assist spring 36 is supported by the worm-driven wheel gear 35, i.e. the supporting pin 35e, via the supporting table 41. The other end of the assist spring 36 is supported by the housing 33, i.e., the supporting portion 38d, via the supporting table 42. Therefore, compared with an alternative assist spring which has both ends directly formed and supported by the supporting pin 35e and the supporting portion 38d, the assist spring 36 can be designed with larger degree of freedom.

According to the embodiment of the present invention, the supporting tables 41 and 42 are provided with the positioning pins 41b and 42b, each of which determines the position of the assist spring 36. The assist spring 36 can be effectively prevented from dropping out of the worm-driven wheel gear 35 and the housing 33 especially when the assist spring 36 moves.

According to the embodiment of the present invention, the respective supporting tables 41 and 42 are provided with the recessed portions corresponding to and straddling the supporting pin 35e and the supporting portion 38d. Therefore, the supporting tables 41 and 42 can be effectively prevented from dropping out of the supporting pin 35e and the supporting portion 38d especially when the assist spring 36 moves.

According to the embodiment of the present invention, the opposite ends of the assist spring 36 are supported by the supporting pin 35e and the supporting portion 38d via the supporting tables 41 and 42. Alternatively, the one end and the other end of the assist spring 36 can be formed corresponding to the shape of the supporting table 41 and 42. In this case, the one end and the other end of the assist spring 36 can be directly supported by the supporting pin 35e and the supporting potion 38d.

According to the embodiment of the present invention, the rotational shaft 34 of the electric motor 32 is provided with the worm portion 34a. The worm-driven wheel gear 35 is meshed with the rotational shaft 34 via the worm portion 34a. Alternatively, the rotational shaft 34 can be provided with a gear. In this case, the worm-driven wheel gear 35 is meshed with the rotational shaft 34 via the gear.

According to the embodiment of the present invention, the housing 33, i.e., the supporting portion 38d and the restraining wall 38e, is used as a stationary portion. Alternatively, the stationary portion can be provided at a side of the housing cover 37. Further alternatively, the stationary portion can be provided at an appropriate portion of a bracket which is used for fixing the actuator 30 to the vehicle.

According to the embodiment of the present invention, the assist spring 36 is a coil spring.
Alternatively, the assist spring 36 can be a type of a leaf spring.

## Claims

1. A clutch actuator (30) comprising a driving power source (32), a rotational member (35) connected to be rotationally driven by the driving power source (32), a driven rotational member (50) operatively connected to the rotational member (35) for rotation integrally with the rotation of the rotational member (35), a stationary housing (33) for housing the rotational member (35) and the driven rotational member (50) therein, and an output rod (31) operatively connected to the driven rotational member (50) and linearly drivable thereby to change an engagement condition of a clutch assembly (20)
**characterized in that** the clutch actuator (30) further comprises:
a common pivot shaft (35b) connecting the rotational member (35) and the driven rotational member (50) and holding the rotational member (35) and the driven rotational member (50) apart so that they are positioned in different planes to each other;
a bridging member (35e) positioned between the rotational member (35) and the driven rotational member (50);
the bridging member (35e) having opposite end portions of which one end portion is connected to an outer peripheral portion of the rotational member (35) and the other is connected to an outer peripheral portion of the driven rotational member (50);
the outer peripheral portion of the rotational member (35) and the outer peripheral portion of the driven rotational member (50) being offset from a rotational centre of the rotational member (35); and
an assist spring (36) acting between the stationary housing (33) and the bridging member (35e) for biasing the driven rotational member (50) for rotation in one direction.

2. A clutch actuator (30) according to claim 1, further comprising a first spring support (41) for locating one end of the assist spring (36) on the bridging member (35e) and a second spring support (42) for locating the other end of the assist spring (36) on the stationary portion (33) such that the assist spring (36) is movably supported by the first spring support (41) and the second spring support (42) and is moved in response to the rotation of the driven rotational member (50).

3. A clutch actuator according to claim 2, wherein a restraining wall (38e) is provided to arrest movement of the first spring support (41) during movement of the actuator (30) in the clutch-actuating direction, while permitting continued movement of the driven rotational member (50) and output rod (31) in the same direction.

4. A clutch actuator according to any preceding claim, wherein the first spring support (41) comprises a spring seat platform portion (41 a) shaped to straddle the supporting member (35e).

5. A clutch actuator according to claim 4, wherein the assist spring is a coil spring and the first spring support (41) further comprises a pin portion (41 b) shaped to locate along the axis of the assist spring (36).

6. A clutch actuator according to any preceding claim, wherein the second spring support (42) comprises a spring seat platform portion (42a) shaped to locate on the stationary housing (33).

7. A clutch actuator according to claim 6, wherein the assist spring is a coil spring and the second spring support (42) further comprises a pin portion (42b) shaped to locate along the axis of the assist spring (36).

8. A clutch actuator according to any preceding claim, wherein the driving power source (32) and the output rod (31) are aligned on the same side of the stationary housing (33).

9. A transmission comprising a clutch engageable with and disengageable from an engine, under the control of an actuator according to any preceding claim.

10. A clutch actuator (30) according to claim 1, wherein the assist spring (36) is provided between the rotational member (35) and the driven rotational member (50).

11. A clutch actuator (30) according to claim 10 wherein one side of the rotational member (35) in an axial direction of the common pivot shaft (36b) and the other side of the driven rotational member (50) in the axial direction of the common pivot shaft (35b) form a space therebetween, and the assist spring (36) is provided in the space.

## Patentansprüche

1. Kupplungsaktor (30), enthaltend eine Antriebleistungsquelle (32), ein Drehbauteil (35), das so verbunden ist, dass es von der Antriebsleistungsquelle (32) zur Drehung anzutreiben ist, ein angetriebenes Drehbauteil (50), das wirksam mit dem Drehbauteil (35) zur integralen Drehung mit der Drehung des Drehbauteils (35) verbunden ist, ein stationäres Gehäuse (33) zum Aufnehmen des Drehbauteils (35) und des angetriebenen Drehbauteils (50) darin, und eine Ausgangsstange (31), die wirksam mit dem angetriebenen Drehbauteil (50) verbunden ist und linear davon zum Ändern eines Eingriffszustands einer Kupplungsanordnung (20) antreibbar ist,
**dadurch gekennzeichnet, dass** der Kupplungsaktor (30) weiter enthält:
eine gemeinsame Drehwelle (35b), die das Drehbauteil (35) und das angetriebene Drehbauteil (50) verbindet und das Drehbauteil (35) und das angetriebene Drehbauteil (50) getrennt hält, so dass sie in verschiedenen Ebenen zueinander positioniert sind;
ein Überbrückungsbauteil (35e), das zwischen dem Drehbauteil (35) und dem angetriebenen Drehbauteil (50) positioniert ist;
wobei das Überbrückungsbauteil (35e) entgegengesetzte Endbereiche hat, von denen ein Endbereich mit einem Außenumfangsbereich des Drehbauteils (35) verbunden ist und der andere mit einem Außenumfangsbereich des angetriebenen Drehbauteils (50) verbunden ist;
der Außenumfangsbereich des Drehbauteils (35) und der Außenumfangsbereich des angetriebenen Drehbauteils (50) von einem Drehpunkt des Drehbauteils (35) versetzt sind; und
eine Hilfsfeder (36), die zwischen dem stationären Gehäuse (33) und dem Überbrückungsbauteil (35e) wirkt, zum Vorspannen des angetriebenen Drehbauteils (50) zur Drehung in einer Richtung.

2. Kupplungsaktor (30) nach Anspruch 1, weiter enthaltend
eine erste Federaufhängung (41) zum Anordnen eines Endes der Hilfsfeder (36) an dem Überbrückungsbauteil (35e) und
eine zweite Federaufhängung (42) zum Anordnen des anderen Endes der Hilfsfeder (36) an dem stationären Bereich (33), so dass die Hilfsfeder (36) von der ersten Federaufhängung (41) und der zweiten Federaufhängung (42) bewegbar gehalten wird und in Antwort auf die Drehung des angetriebenen Drehbauteils (50) bewegt wird.

3. Kupplungsaktor nach Anspruch 2, wobei eine Begrenzungswand (38e) zum Arretieren der Bewegung der ersten Federaufhängung (41) während der Bewegung des Aktors (30) in der Kupplungsansteuerungsrichtung vorgesehen ist, während sie eine fortgesetzte Bewegung des angetriebenen Drehbauteils (50) und der Ausgangsstange (31) in der gleichen Richtung zulässt.

4. Kupplungsaktor nach einem der vorhergehenden Ansprüche, wobei die erste Federaufhängung (41) einen Federsitzplattformbereich (41 a) enthält, der so ausgebildet ist, dass er das Haltebauteil (35e) überspannt.

5. Kupplungsaktor nach Anspruch 4, wobei die Hilfsfeder eine Schraubenfeder ist und die erste Federaufhängung (41) weiter einen Stiftbereich (41b) enthält, der zum Anordnen entlang der Achse der Hilfsfeder (36) geformt ist.

6. Kupplungsaktor nach einem der vorhergehenden Ansprüche, wobei die zweite Federaufhängung (42) einen Federsitzplattformbereich (42a) enthält, der zum Anordnen an dem stationären Gehäuse (33) geformt ist.

7. Kupplungsaktor nach Anspruch 6, wobei die Hilfsfeder eine Schraubenfeder ist und die zweite Federaufhängung (42) weiter einen Stiftbereich (42b) enthält, der zum Anordnen entlang der Achse der Hilfsfeder (36) geformt ist.

8. Kupplungsaktor nach einem der vorhergehenden Ansprüche, wobei die Antriebsleistungsquelle (32) und die Ausgangsstange (31) auf der gleichen Seite des stationären Gehäuses (33) ausgerichtet sind.

9. Getriebe, enthaltend eine Kupplung, die mit einem Verbrennungsmotor in Eingriff gebracht und von diesem gelöst werden kann, unter der Steuerung eines Aktors nach einem der vorhergehenden Ansprüche.

10. Kupplungsaktor (30) nach Anspruch 1, wobei die Hilfsfeder (36) zwischen dem Drehbauteil (35) und dem angetriebenen Drehbauteil (50) vorgesehen ist.

11. Kupplungsaktor (30) nach Anspruch 10, wobei eine Seite des Drehbauteils (35) in einer axialen Richtung der gemeinsamen Drehwelle (35b) und die andere Seite des angetriebenen Drehbauteils (50) in der axialen Richtung der gemeinsamen Drehwelle (35b) einen Raum dazwischen bilden, und die Hilfsfeder (36) in dem Raum vorgesehen ist.

## Revendications

1. Actionneur d'embrayage (30) comprenant une source de puissance d'entraînement (32), un élément rotatif (35) connecté pour être entraîné en rotation par la source de puissance d'entraînement (32), un élément rotatif entraîné (50) fonctionnellement connecté à l'élément rotatif (35) en vue d'une rotation intégralement avec la rotation de l'élément rotatif (35), un boîtier stationnaire (33) pour loger l'élément rotatif (35) et l'élément rotatif entraîné (50) en lui-même, et une tige de sortie (31) fonctionnellement connectée à l'élément rotatif entraîné (50) et susceptible d'être entraîné linéairement par celui-ci pour changer une condition d'engagement d'un assemblage embrayage (20)
**caractérisé en ce que** l'actionneur embrayage (30) comprend en outre :
un arbre de pivotement commun (35b) qui connecte l'élément rotatif (35) et élément rotatif entraîné (50) et qui maintient l'élément rotatif (35) et l'élément rotatif entraîné (50) en écartement de telle manière qu'ils sont positionnés dans des plans différents l'un par rapport à l'autre ; un élément de pontage (35e) positionné entre l'élément rotatif (35) et
l'élément rotatif entraîné (50) ;
l'élément de pontage (35e) ayant des portions terminales opposées dont l'une est connectée à une portion périphérique extérieure de l'élément rotatif (35) et dont l'autre est connectée à une portion périphérique extérieure de l'élément rotatif entraîné (50) ;
la portion périphérique extérieure de l'élément rotatif (35) et la portion périphérique extérieure de l'élément rotatif entraîné (50) étant déportées depuis un centre de rotation de l'élément rotatif (35) ; et
un ressort d'assistance (36) agissant entre le boîtier stationnaire (33) et
l'élément de pontage (35e) pour solliciter l'élément rotatif entraîné (50) pour une rotation dans une direction.

2. Actionneur d'embrayage (30) selon la revendication 1, comprenant en outre un premier support de ressort (41) pour localiser une extrémité du ressort d'assistance (36) sur l'élément de pontage (35e) et un second support de ressort (42) pour localiser l'autre extrémité du ressort d'assistance (36) sur la portion stationnaire (33) de telle façon que le ressort d'assistance (36) est supporté de façon mobile par le premier support de ressort (41) et le second support de ressort (42) et est déplacé en réponse à la rotation de l'élément rotatif entraîné (50).

3. Actionneur d'embrayage selon la revendication 2, dans lequel une paroi de restriction (38e) est prévue pour arrêter le mouvement du premier support de ressort (41) pendant le mouvement de l'actionneur (30) dans la direction d'actionnement de l'embrayage, tout en permettant une poursuite du mouvement de l'élément rotatif entraîné (50) et de la tige de sortie (31) dans la même direction.

4. Actionneur d'embrayage selon l'une quelconque des revendications précédentes, dans lequel le premier support de ressort (41) comprend une portion formant plate-forme d'assise de ressort (41a) conformée pour chevaucher l'élément de support (35e).

5. Actionneur d'embrayage selon la revendication 4, dans lequel le ressort d'assistance est un ressort à boudin et le premier support de ressort (41) comprend en outre une portion en forme de tige (41b) conformée pour se placer le long de l'axe ressort d'assistance (36).

6. Actionneur d'embrayage selon l'une quelconque des revendications précédentes, dans lequel le second support de ressort (42) comprend une portion formant plate-forme d'assise de ressort (42a) conformée pour se placer sur le boîtier stationnaire (33).

7. Actionneur d'embrayage selon la revendication 6, dans lequel le ressort d'assistance est un ressort à boudin et le second support de ressort (42) comprend en outre une portion en forme de tige (42b) conformée pour se placer le long de l'axe du ressort d'assistance (36).

8. Actionneur d'embrayage selon l'une quelconque des revendications précédentes, dans lequel la source de puissance d'entraînement (32) et la tige de sortie (31) sont alignées sur le même côté du boîtier stationnaire (33).

9. Transmission comprenant à un embrayage susceptible d'être engagé et dégagé vis-à-vis d'un moteur, sous la commande d'un actionneur selon l'une quelconque des revendications précédentes.

10. Actionneur d'embrayage (30) selon la revendication 1, dans lequel le ressort d'assistance (36) est prévu entre l'élément rotatif (35) et l'élément rotatif entraîné (50).

11. Actionneur d'embrayage (30) selon la revendication 10, dans lequel un côté de l'élément rotatif (35) dans une direction axiale sur l'arbre de pivotement commun (36b) et l'autre côté de l'élément rotatif entraîné (50) dans la direction axiale de l'arbre de pivotement commun (35b) forment un espace entre eux, et le ressort d'assistance (36) est prévu dans l'espace.
